# EUROPEAN PATENT APPLICATION

(11) **EP 1 331 167 A1**
(43) Date of publication of application: **30.07.2003**
(21) Application number: 02425025.0
(22) Date of filing: 25.01.2002
(51) Int. Cl.: B62M 1/02, B62M 9/06

(54) **Device for inverting the direction of rotation of the pedal stroke for bicycles**

(71) Applicant: Catarinelli, Marco, 06100 Perugia (IT); Testi, Franco, 06074 - Olmo (PG) (IT)
(72) Inventor: Catarinelli, Marco, 06100 Perugia (IT); Testi, Franco, 06074 - Olmo (PG) (IT)
(74) Representative: Lanzoni, Luciano

(57) **Abstract**

A device for inverting the direction of rotation of the pedal stroke for bicycles comprising a first and a second driven rotating organ (19a, 19b) mounted on a driving rotating shaft (16) which has two mutually opposite ends (16a, 16b) each connected to a pedal crank (17a, 17b); a first freewheel mechanism (20a) operatively active between the first driven organ (19a) and the shaft (16); a second freewheel mechanism (20b) operatively active between the second driven organ (19b) and the shaft (16) and mounted in opposite direction of rotation with respect to the first freewheel mechanism (20a). The device further comprises torque inverter means (26) operatively active between the first (19a) and the second (19b) driven organ to cause said first (19a) and said second (19b) driven organ to rotate simultaneously and according to mutually opposite directions of rotation.

## Description

The present invention relates to a device for inverting the direction of rotation of the pedal stroke for bicycles and to a bicycle comprising said device.

In the field of competition and road bicycles, numberless solutions have been proposed, differing in shape, dimensions and materials of frames, wheels and accessories, to suit the machine to the specific use and/or to the physical characteristics of the user.

Both for racing and recreational purposes, the personalisation of the machine in relation to one's own anthropomorphic and physiological requirements is very import to avoid acquiring wrong positions which could be harmful to the body.

Aside from these differences, the essential parts of prior art bicycles remain the frame, two wheels, the seat, the handlebar and the pedal assembly, kinematically connected, usually by means of a chain, to the rear wheel, to transmit the forces exerted by the cyclist to the pedals on to the road and allow the bicycle to advance.

As is well known, the pedal assembly, or central mechanism, is constituted by a rotating shaft mounted on balls in the central pipe. On the shaft are keyed the pedal cranks that bear, at their own ends, the axes of the pedals. The shaft is rigidly connected to a gear wheel, or crown gear, for the transmission of motion, through a chain, to the sprocket of the rear wheel.

The bicycle may comprise multiple crowns and/or sprockets with different numbers of teeth and appropriate means for moving the chain thereon, so as to vary the gearing-up, i.e. the ration between the number of teeth of the sprocket and the number of teeth of the crown.

Bicycles also exist that are equipped with a gear transmission inserted in the rear hub, and bicycles with a pedal brake, usually also enclosed in the hub adjacent to the sprocket.

In the prior art, briefly summarised above, the sole movement of the pedals that causes the bicycle to advance is the one concurring with the direction of rotation of the wheels, which henceforth shall be called direct.

The cyclist's action in the direct rotation motion comprises two phases, a thrusting one and a lightening one, which make the relationship between the flexor muscles and the extensor muscles very important.

The main drawback of prior art bicycles is, in fact, that the thrust phase can be carried out only in correspondence with the direct rotation direction. This movement always subjects the same muscles to work cycles whilst antagonist muscles are not heavily used, except during short resting phases in which the cyclists pedals in the reverse direction and idles, to eliminate part of the lactic acid formed during the previous use.

In this situation the technical task constituting the basis for the present invention is to provide a device for inverting the direction of rotation of the pedal stroke for bicycles that is able to overcome the aforementioned drawings.

In particular, an aim of the present invention is to provide a device that allows to make the bicycle advance by pedalling both in the direct and in the indirect direction.

Another aim of the present invention is also to provide a device that allows to train muscle bands that normally are not heavily used during the traditional pedal stroke.

Yet another aim of the present invention is to provide a device that makes bicycling more varied and entertaining.

A further aim of the present invention is to provide a device for inverting the direction of rotation of the pedal stroke that can be applied during the assembly phase to traditional bicycles, without having to make costly changes to the structure of the bicycle itself.

Lastly, an aim of the present invention is to make available a bicycle provided with said device for inverting the direction of rotation of the pedal stroke.

The technical task and the specified aims are achieved by a device and by a bicycle having the characteristics set out in one or more of the accompanying claims.

A description is now provided, purely by way of non limiting indicative example, of a preferred, but not exclusive, embodiment of a bicycle provided with a device according to the invention, illustrated in the accompanying drawings, in which:
- Figure 1 shows a lateral schematic view of a bicycle provided with a device according to the invention;
- Figure 2 shows an exploded and partially sectioned view of the device of the bicycle of Figure 1, associated to the crowns and to the pedal cranks of the bicycle.

With reference to the aforementioned figures, the bicycle provided with the device according to the present invention is indicated with the number 1.

The bicycle 1 comprises a frame 2 usually constituted by tubes 3, made of steel, aluminium or composite materials, mutually connected in correspondence with nodes 4, known as pipes.

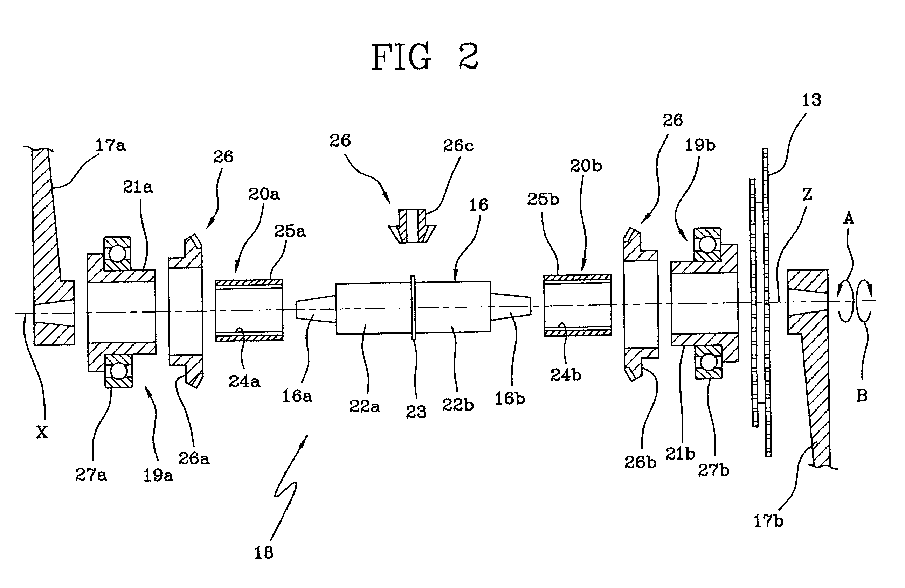

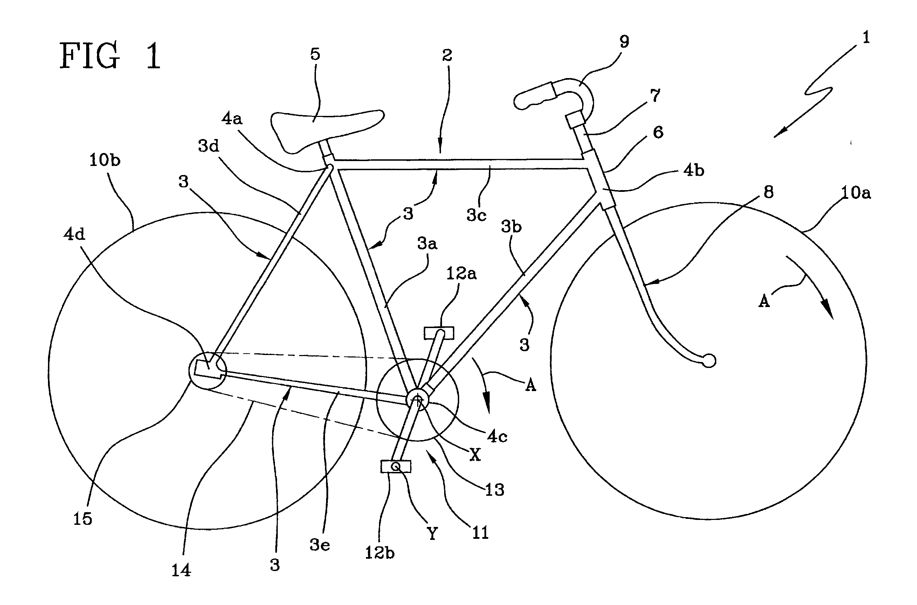

Figure 1 shows a traditional frame having three main tubes 3a, 3b, 3c in triangle disposition and mutually connected in correspondence with a first upper node 4a and with a second upper node 4b and with a lower node 4c, known as central pipe.

The frame 2 may in any case have structurally different and more complex forms (not illustrated herein).

From the first upper node 4a, in correspondence with which is also located a seat 5, and from the central pipe 4c develop respectively two auxiliary tubes 3d, 3e joined in correspondence with a fourth node 4d, whilst on the second upper node 4b is positioned a steering tube 6.

The tube 7 of a fork 8 is inserted in the steering pipe 6, the upper end of the tube7 bears a handlebar 9.

A first front wheel 10a is fastened in rotating fashion to the lower end of the fork 8 and a second rear wheel 10b is mounted in correspondence with the fourth node 4d.

The bicycle 1 further comprises a pedal assembly 11, or central mechanism, provided with pedals 12a, 12b and mounted in the central pipe 4c.

The pedal assembly 11 is operatively connected to the rear wheel 10b, by means of a crown gear 13, a chain 14 and a sprocket 15, to transmit the forces applied on the pedals 12a, 12b to the rear wheel 10b and to the surface whereon the bicycle is to travel.

In particular, the central mechanism 11 is constituted by a shaft 16 (Figure 29 mounted in rotary fashion in the central pipe 4c to rotate about its own longitudinal axis X and having a first end 16a and a second end 16b facing opposite sides of the frame 2.

On the ends 16a, 16b of the shaft 16 are respectively keyed a first 17a and a second 17b pedal cranks extending transversely from the axis X in mutually opposite directions.

Each pedal crank 17a, 17b bears, at an opposite end from the one fastened to the shaft 16, a pedal 12a, 12b able to rotate about an axis Y substantially parallel to the axis X of the shaft itself 16.

Advantageously, the bicycle 1 further comprises a device 18 for inverting the direction of rotation of rotation of the pedal stroke.

Said device 18 is formed by a first rotating organ 19a mounted on the shaft 16 through a first freewheel mechanism 20a operatively active between the first rotating organ 19a itself and the shaft 16. Moreover, the device 18 is provided with a second rotating organ 19b which, like the first rotating organ 19a, is mounted on the shaft 16 through a second freewheel mechanism 20b operatively active between the second rotating organ 19b and the shaft 16.

For the sake of clarity in the description that follows, it should be recalled that the freewheel mechanism is a mechanism inserted between two coaxial organs (driving and driven), such as to make them mutually integral when the velocity of rotation of the driving organ tends to be greater than the velocity of rotation of the driven organ, and to leave them free when the velocity of rotation of the driving organ is less than the velocity of rotation of the driven organ.

The shaft 16 hence behaves as a driver organ because it is able to transmit the motion imparted thereto through the pedals 12a, 12b to the first rotating organ 19a or to the second rotating organ 19b, or driven organs.

More specifically, the first freewheel mechanism 20a and the second freewheel mechanism 20b are mounted in opposite rotary direction on the shaft 16.

This means that the direction of rotation of the driving shaft 16 that engages the connection with the first freewheel mechanism 20a is opposite to the direction of rotation of the driving shaft 16 which engages the connection with the second freewheel mechanism 20b.

In particular, the direction of rotation of the shaft 16 that engages the coupling with the second freewheel mechanism 20b concurs with the direct direction of rotation A of the pedals 12a, 12b, i.e. with the direction of rotation of the wheels 10a, 10b during advancement.

Consequently, the direction of rotation of the shaft 16 that engages the connection with the first freewheel mechanism 20a is the direction B contrary to the direction of rotation of the wheels 10a, 10b during advancement.

As shown in Figure 2, the first rotating organ 19a is constituted by a first sleeve 21a coaxially mounted on a first portion 22a of the shaft 16.

The second rotating organ 19b is a second sleeve 21b located on a second portion 22b of the shaft 16 itself axially offset relative to the first 22a.

Preferably, the first rotating organ 19a and the second rotating organ 19b, with the respective freewheel mechanisms 20a, 20b, are separated by a thrust bearing 23 located in an appropriate baffle obtained circumferentially on the shaft 16. As shown in Figure 2, the thrust bearing 23 is positioned substantially halfway on the shaft 16.

The freewheel mechanisms 20a, 20b shown herein are of a known type, for instance with cylindrical rollers 24a, 24b. The rollers 24a, 24b are in contact relationship with the surface of the shaft 16 whilst the outer portion 25a, 25b of each mechanism 21a, 21b is made integral with the respective sleeve 21a, 21b, for instance by press-on insertion or by means of other coupling means.

The second sleeve 21b is rigidly connected to the crown gear 13, or to a group of crown gears of the bicycle 1, in such a way that the axis of rotation Z of the group of crown gears 13 coincides with the longitudinal axis X of the shaft 16.

The device 18 further comprises torque inverter means 26 operatively active between the first driven rotating organ 19a and the second driven rotating organ 19b, to cause them to rotate them simultaneously and according to mutually opposite directions of rotation.

The torque inverter means 26 comprise a first gear wheel, or first crown wheel 26a, integral with and coaxial to the first driven rotating organ 19a, a second gear wheel, defined also as second crown wheel 26b, integral with and coaxial to the second driven rotating organ 19b and a third gear wheel, or planetary gear 26c, engaged both to the first gear wheel 26a and to the second gear wheel 26b, to transmit motion from the first gear wheel 26a to the second gear wheel 26b.

According to the preferred and illustrated embodiment, the two gear wheel 26a, 26b are bevel wheels able to be associated to the sleeves 21a, 21b through connecting means that are known and thus not shown herein.

The planetary gear 26c is mounted idle in rotary fashion in the central node 4c of the bicycle 1, in such a way as to project between the two gear wheels 26a, 26b, which face each other, and to engage with both.

The entire device 18, together with the shaft 16, is housed in appropriate seats obtained in the central node 4c of the bicycle 1 by means of two rolling bearings, for instance ball bearings 27a, 27b, each mounted on a respective sleeve 21a, 21b.

After the mainly structural description above, the operation of the device 18 for inverting the direction of rotation of the pedal stroke is described below.

Let us suppose that the cyclist starts from a fully stopped condition and begins to pedal in the direct direction, i.e. in the same direction of rotation A of the wheels during advancement; the action of the cyclist on the pedals 12a, 12b causes the rotation of the driving shaft 16.

The rotation of the driving shaft 16 entails the engagement of the second freewheel 20b which thus drives with it the second sleeve 21b, the second crown wheel 26b and the crown gear 13. The crown gear 13 through the chain 14 causes the rotation of the pinion 15 connected to the rear wheel 10b and the advancement of the bicycle 1.

Through the planetary gear 26c, the second crown wheel 26b imparts a rotation in the opposite direction B to the first crown wheel 26a, to the first sleeve 21 a and to the first freewheel 20a. Since the first freewheel 20a turns in the opposite direction relative to the shaft 16, it cannot be engaged and it continues to rotate freely relative to the shaft 16.

If the cyclist stops pedalling, which he/she must do for a fraction of a second also to invert the direction of rotation of the pedals, the second freewheel 20b disengages the shaft 16 because the angular velocity of the driving shaft 16 is less than that of the second driven wheel 20b which, by inertia, continues to rotate together with the first and the second sleeve 2 1a, 21b, with the first and the second crown wheel 26a, 26 and the crown gear 13, until it stops and it remains motionless together with the shaft 16.

The inversion of the direction of the pedal stroke instead causes the second freewheel 20b to be disengaged and, after a short transient period during which the angular velocity of the shaft 16 reaches the value of the angular velocity of the first freewheel 20a in motion by inertia, the coupling of the first freewheel 20a itself. In this situation, the first freewheel 20a, integral with the shaft 16 that rotates in the inverse direction B, drives the first sleeve 21a and the first crown wheel 26a. Moreover through the planetary gear 26c, the inverse rotation of the shaft 16 is changed into rotation in the direct direction A of the second crown wheel 26b, of the second sleeve 21b, of the second freewheel 20b and lastly of the crown gear 13. The second freewheel 20b remains uncoupled because it rotates in the opposite direction from the shaft 16.

The shift from inverse to direct pedal stroke causes once again the uncoupling of the first freewheel 20a and the re-coupling of the second freewheel 20b according to a succession of phases wholly similar to the one just described above.

The crown gear 13 thus always rotates in the same direction A, regardless of the direction of rotation of shaft 16 and pedals 12a, 12b.

Although the present device has been described with reference to a bicycle for outdoors use, typically on roads, it can equally be applied to bicycles for physical exercise of the type used in gyms or homes, known as stationary bicycles, to allow the user to pedal both with the direct and inverse stroke.

The invention achieves important advantages.

It should first of all be noted that the device according to the invention allows to guarantee the propulsion of the bicycle pedalling in both directions. It is thereby possible to rest the muscles used in the direct pedal stroke without having to interrupt forward travel.

Moreover, the device according to the present invention allows to exploit different muscle groups, using the best rested ones and giving time to the muscles employed during the previous phase to eliminate the lactic acid that has formed therein.

The bicycling exercise is thus found more complete, less monotonous and more entertaining.

Moreover, in the specific case of stationary bicycles, the device allows to invert the direction of the pedal stroke whilst maintaining the same direction of rotation of the flywheel, to prevent the emergence of undesired inertia forces, due to the inversion of the direction of rotation of the flywheel itself.

Lastly, since the crown, the transmission chain and the sprockets continue to turn in the direct rotation direction, all conventional components remain unchanged, allowing to insert, at the time of assembly, possibly with the box 4c readied for the purpose, the present device in the place of the central mechanism of any bicycle.

## Claims

1. Device for inverting the direction of rotation of the pedal stroke for bicycles, **characterised in that** it comprises:
- a first driven rotating organ (19a) mounted on a driving rotating shaft (16) located in the central node (4c) of a bicycle (1); said shaft (16) having two mutually opposite ends (16a, 16b) each connected to a pedal crank (17a, 17b);
- a first freewheel mechanism (20a) operatively active between the first driven rotating organ (19a) and the driven rotating shaft (16);
- a second driven rotary organ (19b) mounted on said shaft (16) and integrally connected with at least a crown gear (13) of the bicycle (1);
- a second freewheel mechanism (20b) operatively active between the second driven rotating organ (19b) and the driving rotating shaft (16), to make said second rotating organ (19b) integral with said shaft (16) during the rotation of said shaft (16) concurring with the direction of rotation (A) of the wheels (10a, 10b) of the bicycle (1) during advancement; said first freewheel mechanism (20a) and second freewheel mechanism (20b) being mounted in opposite rotary direction on said shaft (16);
- torque inverter means (26) operatively active between the first driven organ (19a) and the second driven organ (19b) to cause said first driven organ (19a) and said second driven organ (19b) simultaneously and according to mutually opposite directions of rotation.

2. Device as claimed in claim 1, **characterised in that** the first driven organ (19a) and the second driven organ (19b) are constituted each by a sleeve (21a, 21b) coaxially and externally mounted on the driving shaft (16); each freewheel mechanism (20a, 20b) being inserted between said sleeve (21a, 21b) and the driving shaft (16).

3. Device as claimed in claim 2, **characterised in that** the first (20a) and the second (20b) freewheel mechanism are freewheels with cylindrical rollers (24a, 24b); said rollers (24a, 24b) being in contact relationship with the shaft (16); each freewheel (20a, 20b) being fastened in the respective sleeve (21a, 21b).

4. Device as claimed in claim 1, **characterised in that** the torque inverter means (25) comprise a first gear wheel (26a), integral with the first driving organ (19a), a second gear wheel (26b), integral with the second driving organ (19b) and a third gear wheel (26c) engaged both to the first (26a) and to the second gear wheel (26b) to transmit motion from said first gear wheel (26a) to said second gear wheel (26b) or vice versa.

5. Device as claimed in claim 3, **characterised in that** the torque inverter means (26) comprise a first gear wheel (26a) fastened externally and coaxially to the first sleeve (21a) and a second gear wheel (26b) fastened externally and coaxially to the second sleeve (21b).

6. Device as claimed in claim 5, **characterised in that** the third gear wheel (26c) is mounted idle in rotary fashion in the central node (4c) of the bicycle (1) and it projects between the first and the second gear wheel (26a, 26b), to engage with both.

7. Device as claimed in claims 4 or 5, **characterised in that** the three gear wheels (26a, 26b, 26c) are bevel gear wheels.

8. Device as claimed in claim 1, **characterised in that** it further comprises means (27a, 27b) for housing said device (18) in the body of the central node (4c) of the bicycle (1).

9. Device as claimed in claim 8, **characterised in that** the means (27a, 27b) for housing said device (18) in the body of the central node (4c) of the bicycle (1) comprise at least a first rolling bearing (27a) mounted coaxially and externally on the first sleeve (21a) and a second rolling bearing (27b) mounted coaxially and externally on the second sleeve (21b).

10. Bicycle comprising:
- a frame (2);
- two wheels (10a, 10b) fastened to the frame (2) in rotary fashion;
- a seat (5) mounted on the frame (2);
- a handlebar (9) fastened to the frame (2);
- a central mechanism (11) mounted on the frame (2) and operatively connected to at least a wheel (10a, 10b);
**characterised in that** it further comprises a device (18) for inverting the direction of rotation of the pedal stroke, according to claims 1 through 9.
